# EUROPÄISCHE PATENTSCHRIFT

(11) **EP 2 751 197 B1**
(45) Veröffentlichungstag und Bekanntmachung des Hinweises auf die Patenterteilung: **16.09.2015**
(21) Anmeldenummer: 12741320.1
(22) Anmeldetag: 27.07.2012
(51) Int. Cl.: C08L 23/16, B29C 51/00, B29C 51/30, C08L 75/04

(54) **THERMOPLASTISCHE ELASTOMERZUSAMMENSETZUNG, FOLIE UND VERWENDUNG**
THERMOPLASTIC ELASTOMER COMPOSITION, FILM AND USE
COMPOSITION D'ÉLASTOMÈRE THERMOPLASTIQUE, FEUILLE ET UTILISATION

(30) Priorität: 02.09.2011 DE 102011053224
(43) Veröffentlichungstag der Anmeldung: 09.07.2014
(73) Patentinhaber: Benecke-Kaliko AG, 30419 Hannover (DE)
(72) Erfinder: MANI, Joseph, 73054 Eislingen (DE); MALNER, Thomas, 73033 Göppingen (DE); BÜHRING, Jürgen, 30900 Wedemark (DE)
(74) Vertreter: Preusser, Andrea
(86) Internationale Anmeldenummer: PCT/EP2012/064774
(87) Internationale Veröffentlichungsnummer: WO 2013/029894

(56) Entgegenhaltungen:
- EP-A1- 1 602 686
- EP-A2- 1 050 549
- DE-A1- 4 211 415

## Beschreibung

Die Erfindung betrifft eine thermoplastische Elastomerzusammensetzung, eine Folie aus dieser thermoplastischen Elastomerzusammensetzung und die Verwendung der Folie zur Herstellung eines Formteils mit dreidimensional strukturierter Folienoberfläche.

Die Verwendung von thermoplastischen Elastomerzusammensetzungen für die Herstellung von Folien und Formteilen, die beispielsweise im Automobilinnenbereich eingesetzt werden, ist z. B. aus der DE 100 18 196 A1 bekannt. Dabei können unterschiedliche Typen von thermoplastischen Elastomeren zum Einsatz kommen, wie thermoplastische Polyurethane (TPU) oder thermoplastische Elastomere auf Olefinbasis (TPO), wobei letztere z. B. Verschnitte aus (vernetztem) Ethylen-Propylen-Dien-Kautschuk (EPDM) mit Polyethylen (PE) und/oder Polypropylen (PP) sein können. Thermoplastische Elastomere zeichnen sich dadurch aus, dass sie sich im Bereich üblicher Gebrauchstemperaturen gummielastisch verhalten, aber bei höherer Temperatur wie Thermoplaste verarbeitet werden können.

Die Formteile für den Automobilinnenbereich können als Überzug von Armaturenbrettern, Türeinsätzen, Sonnenblenden etc. im Automobilinnenbereich eingesetzt werden und bestehen üblicherweise aus einer mehrschichtigen, unterschäumten Folie, die auf ihrer Oberseite eine dreidimensional strukturierte, geprägte Oberfläche aufweist, nämlich eine so genannte Musterung oder Narbung in verschiedensten Formen und Ausführungen. Die als Kompaktfolie ausgebildete Oberflächenfolie ist dabei auf der Unterseite mit einer Schaumschicht niedriger Dichte als Unterschicht versehen, die eine ansprechende Haptik, d.h. eine angenehm "weiche" Griffigkeit des Materials bewirkt. Die geschäumte Schicht kann dabei vor oder nach der Formgebung aufgebracht werden. Für die Oberflächenfolie und die geschäumte Unterschicht sind schon vielfältige Materialien wie Polyvinylchlorid (PVC), Polypropylen (PP), thermoplastische Polyolefine (TPO) usw. oder Kombinationen aus solchen Materialien eingesetzt worden.

Im Stand der Technik sind zur Herstellung solcher Formteile verschiedene Verfahren bekannt, zum Beispiel das Standard-Tiefziehverfahren, bei dem das Einformen einer vorher hergestellten und durch Walzverfahren mit einer Oberflächen-Prägung oder - Narbung versehenen Folie in eine dreidimensionale, bauteil-geometrische Struktur durch das Einfahren eines die spätere Bauteilkontur bildenden Tiefziehstempels in die Folie erfolgt. Ein weiteres Verfahren zur Herstellung von werkzeugfallenden einzelnen Formteilen ist das "Inmould-Graining-Verfahren (IMG-Verfahren)", welches sich als Spezialverfahren aus dem Negativ-Tiefziehverfahren entwickelt hat. Dieses Inmould-Graining-Verfahren, bisher im Wesentlichen mit seinem englischsprachigen Begriff bekannt, lässt sich wohl am besten mit dem Begriff "narbgebendes Negativ-Tiefziehverfahren" übersetzen.

Die Anforderung an das Ausgangsmaterial sind beim Standardziehverfahren und beim narbgebenden Negativ-Tiefziehverfahren unterschiedlich.

Beim Standardtiefziehverfahren ist die Folie bereits mit einer Narbung, d.h. mit einer durch ein vorhergehendes Walzverfahren durchgeführten Oberflächenprägung versehen. Diese Narbung darf durch das Strecken der Folie beim Tiefziehprozess nicht zerstört oder verändert werden. Dazu müssen die Folie und ihre Narbung so stabil sein, dass eine solche Schädigung sicher vermieden wird. Um diese Stabilität zu erreichen, wird die Folie im Stand der Technik vor dem Tiefziehen vernetzt, etwa durch zugegebene Additive als Vernetzungshilfsmittel oder durch eine vor dem Tiefziehen erfolgende Elektronenstrahlvernetzung. Ein Verfahren zur Herstellung einer genarbten Folie für ein Standardtiefziehverfahren wird in der EP-A-1 149 858 beschrieben, wobei die geprägte Folie aus einer Polyolefinmasse vor dem Tiefziehen mit Elektronenstrahlen vernetzt wird.

Beim narbgebenden Negativ-Tiefziehverfahren werden jedoch etwas andere Anforderungen an das Ausgangsmaterial für die Oberfolie gestellt. Hier muss das Ausgangsmaterial eine gute Abformbarkeit aufweisen, d. h. das Narbbild muss gut von der Form auf das tiefgezogene Folienmaterial übertragbar sein. Ferner muss die Haftung zur Form, die in der Regel aus Stahl oder mikroporösem Nickel besteht, reduziert sein, damit eine sichere Entformung ohne Zerstörung gewährleistet ist.

Neben diesen für den direkten Formprozess wichtigen Eigenschaften sollten natürlich auch die für das Endprodukt wichtigen Eigenschaften erhalten und nach Möglichkeit noch verbessert werden. Zu diesen Eigenschaften für den Einsatz des Formteils im Automobilinnenbereich zählen eine hohe Abrieb- und Kratzbeständigkeit, eine hohe Medienbeständigkeit, thermische Stabilität, eine angenehme Haptik, Lichtechtheit, Emissionsarmut und eine hohe Mattigkeit (angenehmer matter Glanz).

In der DE 10 2009 025 995 A1 wird ein Verfahren zur Herstellung eines Formkörpers für die Innenverkleidung von Kraftfahrzeugen aus einem Ausgangsmaterial beschrieben, welches unvernetzte Polyolefine und unvernetzten Ionomere enthält, wobei ein flächiger Folienkörper ausgebracht und zur Herstellung der dreidimensional strukturierten Oberfläche und zur Bildung des Formkörpers in einem narbgebenden Negativ-Tiefziehverfahren (IMG) in eine Bauteilform tiefgezogen wird. Das Verfahren soll eine bessere Narbabformung erlauben, eine hohe Narbstabilität und eine sichere Verarbeitung erlauben und eine Oberfläche des Formkörpers mit ausreichend mattem Glanz, d.h. "Mattigkeit" und einer hohen Kratzbeständigkeit sicherstellen. Als Ausgangsmaterial dient eine Mischung aus unvernetzten Polyolefinen und unvernetzten Ionomere und ggf. weiteren Additiven als wesentlichen Bestandteilen.

Typische Folien aus thermoplastischen Polyolefinen (TPO), d. h. thermoplastischen Elastomeren auf Olefinbasis, für den Automobilinnenraum weisen jedoch auf Grund ihrer viskoelastischen Eigenschaften noch Nachteile hinsichtlich ihrer Abformbarkeit auf. TPO-Folien erreichen je nach Narbbild häufig nur eine Narbabformbarkeit gemessen an der Narbtiefe von weniger als 95 %.

Verwendet man thermoplastische Polyurethane (TPU) für Folien im Automobilinnenbereich, so ergibt sich bei diesen das Problem, dass die Folien bei den im narbgebenden Negativ-Tiefziehverfahren üblichen Abformtemperaturen auf Grund der niedrigen Schmelzviskosität beim Verformen zerreißen.

Der Erfindung liegt daher die Aufgabe zu Grunde, eine thermoplastische Elastomerzusammensetzung für eine Folie für das narbgebende Negativ-Tiefziehverfahren (IMG) bereitzustellen, die bei sicherer Verarbeitbarkeit eine verbesserte Abformbarkeit aufweist und bei Verwendung zur Herstellung eines Formteils mit einer dreidimensional strukturierten Folienoberfläche zu einer besseren Wiedergabe des gewünschten Narbbildes führt.

Gelöst wird die Aufgabe dadurch, dass die thermoplastische Elastomerzusammensetzung
a) 10 bis 85 Gewichtsteile zumindest eines thermoplastischen Polyurethans,
b) 10 bis 85 Gewichtsteile zumindest eines unpolaren thermoplastischen Elastomers auf Olefinbasis und/oder eines Verschnittes aus thermoplastischen Polyolefinen und
c) 3 bis 15 Gewichtsteile zumindest eines Phasenvermittlers, ausgewählt aus der Gruppe bestehend aus unmodifizierten Copolymeren aus Ethylen und/oder Propylen und polarem Monomer, enthält,
wobei sich die Anteile von a), b) und c) zu 100 addieren.

Als thermoplastische Polyurethane können solche auf der Basis von Polyethern und/oder Polyestern mit aliphatischen und/oder aromatischen Gruppen eingesetzt werden. Vorzugsweise handelt es sich bei dem thermoplastischen Polyurethan um eines mit aliphatischen Gruppen. Bevorzugt ist, wenn es sich bei der Isocyanatkomponente der thermoplastischen Polyurethans um ein Hexamethylendiisocyanat oder ein Isophorondiisocyanat handelt.

Unmodifizierte Copolymere aus Ethylen und/oder Propylen und polarem Monomer sind solche Copolymere, die durch alleinige Polymerisation ohne nachträgliche Reaktion mit weiteren Substanzen erhalten werden.

Der Grundgedanke der Erfindung ist darin zu sehen, dass für die Erreichung einer maximalen Abformbarkeit bestimmte rheologische Grundvoraussetzungen erfüllt werden müssen. Die Viskosität der Polymerschmelze muss niedrig genug sein, um eine maximale Fließfähigkeit in der Narbe bzw. dem genarbten Werkzeug zu generieren, andererseits darf Viskosität nicht so gering sein, dass die Folien beim Verformen zerreißen.

Durch die Kombination von thermoplastischem Polyurethan und unpolarem thermoplastischem Elastomer in den beanspruchten Mengenverhältnissen gelingt es, die gute Abformbarkeit des TPU mit den für das IMG-Verfahren günstigen Viskositätseigenschaften des TPO oder thermoplastischen Polyolefinenverschnitten zu vereinen. Allerdings müssen in der Zusammensetzung 3 bis 15 Gewichtsteile zumindest eines Phasenvermittlers, ausgewählt aus der Gruppe bestehend aus unmodifizierten Copolymeren aus Ethylen und/oder Propylen und polarem Monomer, vorhanden sein, der die unverträglichen thermoplastischen Elastomere TPU (polar) und TPO/thermoplastischem Polyolefinenverschnitt (unpolar) miteinander besser vermischbar macht. Erst dadurch können die für den Automobilinnenbereich geforderten mechanischen Eigenschaften erreicht werden.

Die thermoplastische Elastomerzusammensetzung zeichnet sich außerdem dadurch aus, dass die eine geringe Haftung zu Stahl aufweist. Dadurch lassen sich Folien aus diesem Material nach dem Tiefziehen im IMG-Verfahren leicht und ohne Zerstörung entformen.

Die aus der erfindungsgemäßen thermoplastischen Elastomerzusammensetzung hergestellten Folien weisen den Vorteil auf, dass sie eine hohe Kratzfestigkeit/Kratzbeständigkeit aufweist. Nach der Prüfung gemäß Erichsen 318 mit einem Nadeldurchmesser von 0,75 mm werden Werte von 3 N, vorzugsweise von 4 N oder mehr erzielt.

Im Vergleich zu Folien, die nur auf TPU basieren ergibt sich zusätzlich ein Kostenvorteil, ohne dass Nachteile in der Haptik zu verzeichnen sind.

Als unpolare thermoplastische Elastomere auf Olefinbasis bzw. thermoplastischer Polyolefinenverschnitt können unterschiedliche Polymere und Polymerverschnitte (Blends) eingesetzt werden, beispielsweise Ethylen-Propylen-Blends, Ethylen-Propylen-Kautschuk (EPM) oder Ethylen-Propylen-Dienkautschuk (EPDM) mit Polypropylen (PP) und/oder Polyethylen (PE).

Gemäß einer vorteilhaften Weiterbildung der Erfindung enthält die thermoplastische Elastomerzusammensetzung 10 bis 85 Gewichtsteile zumindest eines unpolaren thermoplastischen Elastomers auf Olefinbasis.

Es können z. B. Verschnitte aus EPM (Ethylen-Propylen-Kautschuk) und/oder EPDM (Ethylen-Propylen-Dienkautschuk) mit PP (Polypropylen) und/oder PE (Polyethylen) eingesetzt werden. Um die Zusammensetzung hinsichtlich ihres Glanzes nach dem Tiefziehen zu optimieren, hat es sich als vorteilhaft erwiesen, wenn das zumindest eine thermoplastische Elastomer auf Olefinbasis ein Verschnitt aus EPDM mit PP und/oder PE ist. Dadurch wird vermieden, dass der für TPU typische hohe Glanz beim Verziehen oder Tiefziehen auftritt.

Gemäß einer vorteilhaften Weiterbildung der Erfindung ist das EPDM vernetzt (dadurch entsteht ein thermoplastisches Elastomer, dynamisch vernetzt, TPV) und die Größe der Weichsegmente aus EPDM ist kleiner als 50 µm, bevorzugt kleiner als 35 µm, besonders bevorzugt kleiner als 20 µm Dadurch kann die für Folien im Automobilinnenbereich gewünschte Mattigkeit erzeugt werden. Die vernetzten EPDM-Segmente (Partikel) erzeugen eine Rauigkeit der Folienoberfläche, wodurch die Fähigkeit zur diffusen Lichtstreuung erhöht wird. Zudem erhöht die partielle Unverträglichkeit der TPU- und TPO-Phasen die Oberflächenrauigkeit der Folie. Die Oberfläche der aus den Folien hergestellten, tiefgezogenen Formteile weist bei einer Verstreckung von 60 bis 100 % in unlackierter Form einen Glanzgrad, gemessen unter einem Winkel von 60° mit einem Gerät Byk Gardner Mikro Gloss, von weniger als 3 auf.

Als Phasenvermittler können unterschiedlichste unmodifizierte Copolymere aus Ethylen und/oder Propylen und polarem Monomer einzeln oder in Kombination eingesetzt werden. Dazu zählen z. B. Copolymere aus Ethylen und/oder Propylen und ungesättigten Carbonsäuren, Estern von ungesättigen Carbonsäuren, Amiden von ungesättigen Carbonsäuren, Vinylestern (z. B. Vinylacetat oder Vinylpropionat) und Kohlenmonoxid. Beispiele für einsetzbare ungesättigte Carbonsäuren sind: Acrylsäure, Methacrylsäure, Fumarsäure, Itaconsäure, deren Ester und Amide. Die Monomere können einzeln oder in Kombination miteinander eingesetzt werden.

Vorzugsweise ist der zumindest eine Phasenvermittler ein Copolymer aus Ethylen und einem ungesättigten Carbonsäureester, besonders bevorzugt ein Copolymer aus Ethylen und einem Ester der Methacrylsäure. Diese Phasenvermittler haben sich als besonders wirksam im Hinblick auf die Verträglichkeit von TPU und TPO bzw. thermoplastischem Polyolefinverschnitt erwiesen.

Im Hinblick auf eine optimale Mattigkeit, Verarbeitbarkeit und Kratzbeständigkeit hat es sich als vorteilhaft erwiesen, wenn die thermoplastische Elastomerzusammensetzung
a) 40 bis 60 Gewichtsteile zumindest eines thermoplastischen Polyurethans und
b) 40 bis 60 Gewichtsteile zumindest eines unpolaren thermoplastischen Elastomers auf Olefinbasis und/oder eines Verschnittes aus thermoplastischen Polyolefinen
enthält.

Die erfindungsgemäße thermoplastische Elastomerzusammensetzung wird zur Herstellung einer Folie eingesetzt. Die Folie kann durch Extrusion erzeugt werden, wobei die Extrusion bei dem hier eingesetzten Ausgangsmaterial völlig unproblematisch verläuft, da das Material die geeigneten rheologischen Eigenschaften aufweist.

Die aus der thermoplastischen Elastomerzusammensetzung hergestellte Folie kann für die Herstellung eines Formteils mit einer dreidimensional strukturierten Folienoberfläche eingesetzt werden. Das Formteil kann dabei als Folienverbund (mehrlagige Folie) ausgebildet sein, der aus einer strukturierten Oberfolie und einer oder mehreren unteren Folien bestehen kann. Hierdurch ergibt sich eine sehr gut Möglichkeit zur Anpassung der Folieneigenschaften auf den Verwendungszweck. So ist es z. B. möglich, dass die unteren Folien geschäumt sind, um eine angenehme Haptik des Formteils zu erhalten. Die geschäumten Folien können dabei vor dem Tiefziehen aufgebracht werden oder die tiefgezogene Oberfolie wird im Anschluss mit einem Schaummaterial hinterspritzt. Dabei wird eine gute Haftung zwischen der Oberfolie und einer Unterfolie aus TPO ohne den Einsatz zusätzlicher Haftvermittler, wie Klebstoff, erreicht. Die Oberfolien können lackiert werden.

Das Formteil wird vorzugsweise in einem narbgebenden Negativ-Tiefziehverfahren (IMG-Verfahren) in eine Bauteilform, die das gewünschte Narbbild enthält, tiefgezogen. Das Formteil kann durch die Verwendung der erfindungsgemäßen thermoplastischen Elastomerzusammensetzung leicht und ohne Zerstörung entformt werden. Es bildet die gewünschte Narbstruktur sehr genau ab, weist eine hohe Kratzfestigkeit und eine Oberfläche mit mattem Glanz auf.

Besonders geeignet sind die vorgenannten Formteile für einen Einsatz als Innenverkleidungen von Kraftfahrzeugen.

Die Erfindung wird nun anhand von Beispielen näher erläutert. Dazu wurden die in der Tabelle 1 angegebenen thermoplastischen Elastomerzusammensetzungen gemischt, die Mengenangaben in der Tabelle 1 sind Gewichtsteile, und auf einem Zweiwellenextruder zu Folien mit einer Dicke von 0,2 bis 0,5 mm extrudiert. Die Folie wurde nachschließend lackiert und mit einer TPO-Unterfolie mit einer Dicke von 0,5 bis 0,8 mm kaschiert. Die Unterfolie haftete ohne zusätzliche Haftvermittler an der Oberfolie.

Folgende Prüfmethoden wurden angewendet:
**Extrusionsverhalten:** bewertet wurde, ob sich eine homogene Folie ohne Fehler wie Stippen, Oberflächendefekte, Dicken- und Breitenschwankungen mit einer Extrusionsbreite von 900 mm über eine Lauflänge von 300 m extrudieren ließ.
**Melt Flow Rate MFR:** gemessen gemäß ISO 1133 bei 230 °C/2,16 kg.
**Kratzbeständigkeit:** Die Kratzbeständigkeit des Laminates wurde gemäß Erichsen 318 mit einem Nadeldurchmesser von 0,75 mm untersucht.
**Glanz nach der Extrusion:** gemessen unter einem Winkel von 60° mit einem Gerät Byk Gardner Mikro Gloss,
**Glanz nach dem Tiefziehen:** gemessen bei einer Verstreckung von 60 bis 100 % in unlackierter Form unter einem Winkel von 60° mit einem Gerät Byk Gardner Mikro Gloss

**Tabelle 1: Folienzusammensetzungen**

| Substanz | Vergleichsbeispiel 1 | Vergleichsbeispiel 2 | Erfindungsgemäßes Beispiel 3 | Vergleichsbeispiel 4 |
|---|---|---|---|---|
| PP/EPM-Blend | 40 | - | - | |
| PE | 30 | - | - | |
| TPV | 30 | - | 45 | 50 |
| TPU | - | 100 | 45 | 50 |
| Phasenvermittler | - | - | 10 | - |
| UV-Lichtschutzmittel | 0,2 | 0,2 | 0,2 | 0,2 |
| Antioxidationsmittel | 0,3 | 0,3 | 0,3 | 0,3 |
| Ruß | 2,0 | 2,0 | 2,0 | 2,0 |
| Extrusionsverhalten | i.O. | nicht i.O. | i.O. | nicht i.O. |
| MFR (230°C/2,16 kg) | 0,96 g/10 min | 65,9 g/10 min | 11,1 g/10 min | 24,2 g/10 min |
| Kratzbeständigkeit | 2N | >5 N | 4N | 3N |
| Glanz nach Extrusion | 9,7 | 50,2 | 2,0 | 3,2 |
| Glanz nach dem Tiefziehen | 12,6 | 58,6 | 2,9 | Folie reißt |

| | | | | |
|---|---|---|---|---|
| PP/EPM-Blend: 50 Gew.-% PP und 50 Gew.-% EPM, MFR 0,8 g/10 min (230 °C/2,16 kg), Erweichungspunkt ca. 165 °C PE: Ethylen-Octen-Copolymer, MFR 1,0 g/10 min (190 °C/2,16 kg), Erweichungspunkt ca. 70 °C TPV: PP/EPDM Blend mit 70 Gew.-% EPDM, MFR 3,0 g/10 min (230 °C/2,16 kg), Erweichungspunkt ca. 165 °C TPU: aliphatische Polyester basiertes TPU, MFR 7,0 g/10 min (210 °C/2,16 kg), Erweichungspunkt ca. 120 °C Phasenvermittler: Ethylen/Methylacrylat Copolymer, 23-26 Gew.-% Comonomer, MFR 0,4-0,6 g/10 min (190 °C/2,16 kg), Erweichungspunkt ca. 77 °C Lichtschutzmittel: Benzotriazol-Derivat Antioxidationsmittel: sterisch gehindertes Phenol | | | | |

Aus der Tabelle 1 wird ersichtlich, dass einzig die erfindungsgemäße thermoplastische Elastomerzusammensetzung nach Beispiel 3 sich gut extrudieren ließ, eine gute Kratzbeständigkeit aufweist und die gewünschte Mattigkeit zeigt. Das Vergleichsbeispiel 4 ohne Phasenvermittler ließ sich zum einen nicht gut extrudieren, zum anderen riss die Folie beim Tiefziehen, so dass die Zusammensetzung gemäß Vergleichsbeispiel 4 und die resultierende Folie für das narbgebende Negativ-Tiefziehverfahren völlig ungeeignet ist.

Bei der Messung der MFR-Werte zeigte die erfindungsgemäße Mischung einen Wert unter 20 g/10 min, was mit einer optimalen Extrudierbarkeit und Tiefziehbarkeit korreliert werden kann. Materialien mit einem MFR > 20 g/10 min zeigen dagegen ein nachteiliges Verhalten beim Extrudieren und Tiefziehen, bis hin z. B. zu einem Reißen der Folie beim Tiefziehen.

## Patentansprüche

1. Thermoplastische Elastomerzusammensetzung, enthaltend
a) 10 bis 85 Gewichtsteile zumindest eines thermoplastischen Polyurethans,
b) 10 bis 85 Gewichtsteile zumindest eines unpolaren thermoplastischen Elastomers auf Olefinbasis und/oder eines Verschnittes aus thermoplastischen Polyolefinen und
c) 3 bis 15 Gewichtsteile zumindest eines Phasenvermittlers, ausgewählt aus der Gruppe bestehend aus unmodifizierten Copolymeren aus Ethylen und/oder Propylen und polarem Monomer,
wobei sich die Anteile von a), b) und c) zu 100 addieren.

2. Thermoplastische Elastomerzusammensetzung nach Anspruch 1, **dadurch gekennzeichnet, dass** sie 10 bis 85 Gewichtsteile zumindest eines unpolaren thermoplastischen Elastomers auf Olefinbasis enthält.

3. Thermoplastische Elastomerzusammensetzung nach Anspruch 1, **dadurch gekennzeichnet, dass** das zumindest eine unpolare thermoplastische Elastomer auf Olefinbasis ein Verschnitt aus EPDM mit PP und/oder PE ist.

4. Thermoplastische Elastomerzusammensetzung nach Anspruch 3, **dadurch gekennzeichnet, dass** das EPDM vernetzt ist und die Größe der Weichsegmente aus EPDM kleiner als 50 µm ist.

5. Thermoplastische Elastomerzusammensetzung nach zumindest einem der Ansprüche 1 bis 4, **dadurch gekennzeichnet, dass** der zumindest eine Phasenvermittler ein Copolymer aus Ethylen und einem ungesättigten Carbonsäureester ist.

6. Thermoplastische Elastomerzusammensetzung nach Anspruch 5, **dadurch gekennzeichnet, dass** der zumindest eine Phasenvermittler ein Copolymer aus Ethylen und einem Ester der Methacrylsäure ist.

7. Thermoplastische Elastomerzusammensetzung nach zumindest einem der Ansprüche 1 bis 6, **dadurch gekennzeichnet, dass** sie
a) 40 bis 60 Gewichtsteile zumindest eines thermoplastischen Polyurethans und
b) 40 bis 60 Gewichtsteile zumindest eines unpolaren thermoplastischen Elastomers auf Olefinbasis und/oder eines Verschnittes aus thermoplastischen Polyolefinen
enthält.

8. Folie, hergestellt aus der thermoplastischen Elastomerzusammensetzung nach zumindest einem der vorhergehenden Ansprüche.

9. Verwendung der Folie nach Anspruch 8 zur Herstellung eines Formteils mit einer dreidimensional strukturierten Folienoberfläche.

10. Verwendung der Folie nach Anspruch 9, **dadurch gekennzeichnet, dass** das Formteil in einem narbgebenden Negativ-Tiefziehverfahren in eine Bauteilform, die das gewünschte Narbbild als Negativ enthält, tiefgezogen wird.

11. Verwendung der Folie nach Anspruch 9 oder 10 zur Herstellung des Formteils, **dadurch gekennzeichnet, dass** das Formteil als die Innenverkleidung von Kraftfahrzeugen eingesetzt wird.

## Claims

1. Thermoplastic elastomer composition comprising,
a) from 10 to 85 parts by weight of at least one thermoplastic polyurethane,
b) from 10 to 85 parts by weight of at least one olefin-based non-polar thermoplastic elastomer and/or of a blend of thermoplastic polyolefins and
c) from 3 to 15 parts by weight of at least one compatibilizer selected from the group consisting of unmodified copolymers of ethylene and/or propylene and polar monomer,
where the portions of a), b) and c) give a total of 100.

2. Thermoplastic elastomer composition according to Claim 1, **characterized in that** it comprises from 10 to 85 parts by weight of at least one olefin-based non-polar thermoplastic elastomer.

3. Thermoplastic elastomer composition according to Claim 1, **characterized in that** the at least one olefin-based non-polar thermoplastic elastomer is a blend of EPDM with PP and/or PE.

4. Thermoplastic elastomer composition according to Claim 3, **characterized in that** the EPDM has been crosslinked and the size of the soft segments of EPDM is less than 50 µm.

5. Thermoplastic elastomer composition according to at least one of Claims 1 to 4, **characterized in that** the at least one compatibilizer is a copolymer of ethylene and of an unsaturated carboxylic ester.

6. Thermoplastic elastomer composition according to Claim 5, **characterized in that** the at least one compatibilizer is a copolymer of ethylene and of an ester of methacrylic acid.

7. Thermoplastic elastomer composition according to at least one of Claims 1 to 6, **characterized in that** it comprises
a) from 40 to 60 parts by weight of at least one thermoplastic polyurethane and
b) from 40 to 60 parts by weight of at least one olefin-based non-polar thermoplastic elastomer and/or of a blend of thermoplastic polyolefins.

8. Film produced from the thermoplastic elastomer composition according to at least one of the preceding claims.

9. Use of the film according to Claim 8 for the production of a moulding with a three-dimensionally structured film surface.

10. Use of the film according to Claim 9, **characterized in that** the moulding is thermoformed in a negative thermoforming process that provides a grain effect, into a component mould which comprises the desired grain image as negative.

11. Use of the film according to Claim 9 or 10 for the production of the moulding, **characterized in that** the moulding is used as internal cladding of motor vehicles.

## Revendications

1. Composition d'élastomère thermoplastique, contenant :
a) 10 à 85 parties en poids d'au moins un polyuréthanne thermoplastique,
b) 10 à 85 parties en poids d'au moins un élastomère thermoplastique non polaire à base d'oléfine et/ou d'un mélange de polyoléfines thermoplastiques, et
c) 3 à 15 parties en poids d'au moins un compatibilisateur de phases, choisi dans le groupe constitué par les copolymères non modifiés d'éthylène et/ou de propylène et d'un monomère polaire,
la somme des proportions de a), b) et c) étant de 100.

2. Composition d'élastomère thermoplastique selon la revendication 1, **caractérisée en ce qu'**elle contient 10 à 85 parties en poids d'au moins un élastomère thermoplastique non polaire à base d'oléfine.

3. Composition d'élastomère thermoplastique selon la revendication 1, **caractérisée en ce que** ledit au moins un élastomère thermoplastique non polaire à base d'oléfine est un mélange d'EPDM avec du PP et/ou du PE.

4. Composition d'élastomère thermoplastique selon la revendication 3, **caractérisée en ce que** l'EPDM est réticulé et la taille des segments souples de l'EPDM est inférieure à 50 µm.

5. Composition d'élastomère thermoplastique selon au moins l'une quelconque des revendications 1 à 4, **caractérisée en ce que** ledit au moins un compatibilisateur de phases est un copolymère d'éthylène et d'un ester d'acide carboxylique insaturé.

6. Composition d'élastomère thermoplastique selon la revendication 5, **caractérisée en ce que** ledit au moins un compatibilisateur de phases est un copolymère d'éthylène et d'un ester de l'acide méthacrylique.

7. Composition d'élastomère thermoplastique selon au moins l'une quelconque des revendications 1 à 6, **caractérisée en ce qu'**elle contient :
a) 40 à 60 parties en poids d'au moins un polyuréthane thermoplastique et
b) 40 à 60 parties en poids d'au moins un élastomère thermoplastique non polaire à base d'oléfine et/ou d'un mélange de polyoléfines thermoplastiques.

8. Feuille, fabriquée à partir de la composition d'élastomère thermoplastique selon au moins l'une quelconque des revendications précédentes.

9. Utilisation de la feuille selon la revendication 8 pour la fabrication d'une pièce moulée à surface en feuille structurée tridimensionnellement.

10. Utilisation de la feuille selon la revendication 9, **caractérisée en ce que** la pièce moulée est emboutie par un procédé d'emboutissage négatif formant un grain dans un moule de composant qui contient le motif de grain souhaité en tant que négatif.

11. Utilisation de la feuille selon la revendication 9 ou 10 pour la fabrication de la pièce moulée, **caractérisée en ce que** la pièce moulée est utilisée en tant que revêtement intérieur d'automobiles.
